# EUROPEAN PATENT APPLICATION

(11) **EP 4 545 347 A1**
(43) Date of publication of application: **30.04.2025**
(21) Application number: 23830173.3
(22) Date of filing: 26.06.2023
(51) Int. Cl.: B60L 53/16, B62D 25/24

(54) **CHARGING INLET ASSEMBLY AND VEHICLE**

(30) Priority: 30.06.2022 CN 202221664635 U
(71) Applicant: BYD Company Limited, Shenzhen, Guangdong 518118 (CN)
(72) Inventor: ZHANG, Canlin, Shenzhen, Guangdong 518118 (CN); QIU, Fan, Shenzhen, Guangdong 518118 (CN); WANG, Xiangang, Shenzhen, Guangdong 518118 (CN); MAN, Hu, Shenzhen, Guangdong 518118 (CN)
(74) Representative: Taor, Simon Edward William
(86) International application number: PCT/CN2023/102345
(87) International publication number: WO 2024/001996

(57) **Abstract**

A charging inlet assembly and a vehicle. The charging inlet assembly comprises a charging inlet base (1) and a charging inlet internal sliding cover assembly; the charging inlet internal sliding cover assembly comprises a first plate (2) and a second plate (3); the first plate is arranged on the charging inlet base; a movement space for the second plate to move is formed between the first plate and the charging inlet base; a through hole (21) is provided on the first plate; a first charging inlet (11) and a second charging inlet (12) are provided within the through hole; the second plate (3) can move between a first position and a second position; at the first position, the second plate covers the first charging inlet and exposes the second charging inlet; and at the second position, the second plate covers the second charging inlet and exposes the first charging inlet. The charging inlet assembly in the present application does not occupy space other than the first plate.

## Description

### CROSS-REFERENCE TO RELATED APPLICATIONS

The present disclosure claims priority to Chinese Patent Application No. "202221664635.8", filed by the BYD Co., Ltd. on June 30, 2022 and entitled "CHARGING INLET ASSEMBLY AND VEHICLE".

### FIELD

The present disclosure relates to the field of vehicle charging technologies, and more specifically, to a charging inlet assembly and a vehicle.

### BACKGROUND

In an existing vehicle charging inlet structure, when an opening signal is received, an external charging inlet cover can automatically open, and an internal charging inlet cover needs to be opened manually. An opening direction of the internal charging inlet cover is outward flipping, which occupies an external space, and impedes plugging and unplugging of a charging gun, especially in a special usage environment (for example, a storm). The outward flipping of the internal charging inlet cover causes the internal charging inlet cover to be dirty, wet by rainwater, and the like. In this case, usage experience of a user is poor.

Currently, two types of charging inlets exist in the market: an integrated charging inlet and a single charging inlet. The integrated charging inlet integrates a fast charging inlet and a slow charging inlet. A fast charging inlet cover is arranged on the fast charging inlet. A slow charging inlet cover is arranged on the slow charging inlet. When the fast charging inlet is used, the slow charging inlet cover needs to be closed manually, to prevent rainwater and dust from entering the slow charging inlet. Similarly, when the slow charging inlet is used, the fast charging inlet cover needs to be closed manually, to prevent rainwater and dust from entering the fast charging inlet.

It may be learned from the above that the existing integrated charging inlet has the fast charging inlet cover and the slow charging inlet cover, and the fast charging inlet cover and the slow charging inlet cover are flipped outward, which occupies the external space, and impedes the plugging and unplugging the charging gun. In addition, during charging of the integrated charging inlet having the fast charging inlet cover and the slow charging inlet cover, an operation is more cumbersome, and the structure is more complicated with components added.

### SUMMARY

The present disclosure is intended to resolve at least one of technical problems in the related art to some extent.

Therefore, the present disclosure provides a charging inlet assembly.

The charging inlet assembly in the present disclosure includes a charging inlet base and an internal charging inlet sliding cover assembly. The internal charging inlet sliding cover assembly includes a first plate and a second plate. The first plate is arranged on the charging inlet base. A movement space for the second plate to move is formed between the first plate and the charging inlet base. A through hole is provided on the first plate. A first charging inlet and a second charging inlet are provided on an inner side of the through hole. The second plate moves between a first position and a second position. At the first position, the second plate covers the first charging inlet, and exposes the second charging inlet. At the second position, the second plate covers the second charging inlet, and exposes the first charging inlet.

The charging inlet assembly in the present disclosure, the second plate is movable between a first position and a second position. At the first position, the second plate covers the first charging inlet, and exposes the second charging inlet. At the second position, the second plate covers the second charging inlet, and exposes the first charging inlet. In other words, when the first charging inlet is used, the second charging inlet is covered by the second plate, and when the second charging inlet is used, the first charging inlet is covered by the second plate. The second plate moves between the first position and the second position, so that the first charging inlet and the second charging inlet are opened or closed, which does not occupy a space outside the first plate and helps plug and unplug the charging gun compared with an existing manually flipped internal charging inlet cover. In addition, only the second plate is adopted to replace a fast charging inlet cover and a slow charging inlet cover in the related art, which simplifies a charging operating process, reduces components, and causes a simpler structure.

The present disclosure further provides a vehicle. The vehicle includes the above charging inlet assembly.

Part of additional aspects and advantages of the present disclosure is provided in the following description. The part becomes apparent from the following description, or is learned through practice of the present disclosure.

### BRIEF DESCRIPTION OF THE DRAWINGS

FIG. 1 is a schematic diagram of a second plate of a charging inlet assembly at a first position according to an embodiment of the present disclosure;
FIG. 2 is a schematic diagram of a second plate of a charging inlet assembly at a second position according to an embodiment of the present disclosure;
FIG. 3 is a schematic diagram of a charging inlet base of a charging inlet assembly according to an embodiment of the present disclosure;
FIG. 4 is a schematic diagram of an internal charging inlet sliding cover assembly of a charging inlet assembly according to an embodiment of the present disclosure;
FIG. 5 is a schematic diagram of a second plate of an internal charging inlet sliding cover assembly of a charging inlet assembly according to an embodiment of the present disclosure; and
FIG. 6 is a schematic view of a charging inlet assembly according to an embodiment of the present disclosure.

### DETAILED DESCRIPTION

Embodiments of the present disclosure are described in detail below, and examples of the embodiments are shown in drawings. Same or similar elements or elements having same or similar functions are represented by same or similar reference numerals throughout the description. The embodiments described below with reference to the drawings are exemplary and intended to explain the present disclosure, and cannot be construed as a limitation on the present disclosure.

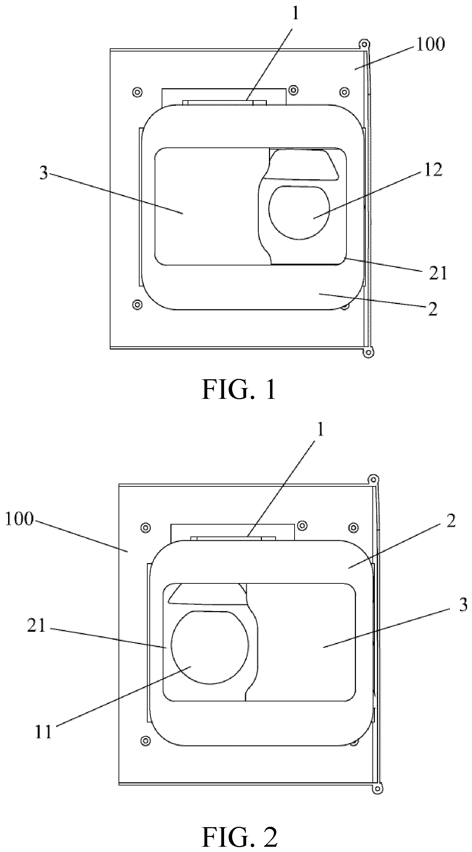

As shown in FIG. 1 to FIG. 6, a charging inlet assembly in an embodiment of the present disclosure includes a charging inlet base 1 and an internal charging inlet sliding cover assembly. The internal charging inlet sliding cover assembly includes a first plate 2, a second plate 3 and a driving device 4. The first plate 2 is arranged on the charging inlet base 1. A movement space 5 for the second plate 3 to move is formed between the first plate 2 and charging inlet base 1. A through hole 21 is provided on the first plate 2. A first charging inlet 11 and a second charging inlet 12 are provided on an inner side of the through hole 21. The first charging inlet 11 and the second charging inlet 12 are arranged on a bottom wall of the charging inlet base 1 directly facing the through hole 21. The driving device 4 is configured to drive the second plate 3 to move between a first position (refer to FIG. 1) and a second position (refer to FIG. 2) in a first direction (that is, directions X in FIG. 1 and FIG. 2). At the first position, the second plate 3 covers the first charging inlet 11, and exposes the second charging inlet 12. In this case, a charging gun may be inserted into the second charging inlet 12. At the second position, the second plate 3 covers the second charging inlet 12, and exposes the first charging inlet 11. In this case, the charging gun may be inserted into the first charging inlet 11.

Referring to FIG. 1, the charging inlet base 1 is mounted to a vehicle body sheet metal 100.

A sliding resistance exists between a contact part of the second plate 3 and the movement space 5, to ensure that the second plate 3 does not shift as a result of acceleration/deceleration of a vehicle.

The direction X may be a front-rear direction of the vehicle. In this case, the first charging inlet 11 and the second charging inlet 12 are arranged from front to rear. The direction X may alternatively be an up-down direction of the vehicle. In this case, the first charging inlet 11 and the second charging inlet 12 are arranged from up to down.

The first plate 2 and the charging inlet base 1 may be connected through a snap, a bolt, a rivet, and the like. An outer surface of the first plate 2 may be provided with a decorative feature such as a leather texture, a spray-coated laser-engraved pattern, or a light-transmissive pattern.

The second plate 3 is a hard plastic or a metal member. An outer surface of the second plate 3 may be provided with a decorative feature such as a leather texture, a spray-coated laser-engraved pattern, or a light-transmissive pattern.

In an embodiment, one of the first charging inlet 11 and the second charging inlet 12 is a fast charging interface, and the other is a slow charging interface. In this way, charging switching between a fast charging inlet and a slow charging inlet can be realized through the second plate 3. To be specific, when fast charging is performed through the fast charging inlet, the slow charging inlet is covered by the second plate 3, and when fast charging is performed through the slow charging inlet, the fast charging inlet is covered by the second plate 3, to prevent rainwater, dust, and the like from entering a charging inlet that does not need to be used.

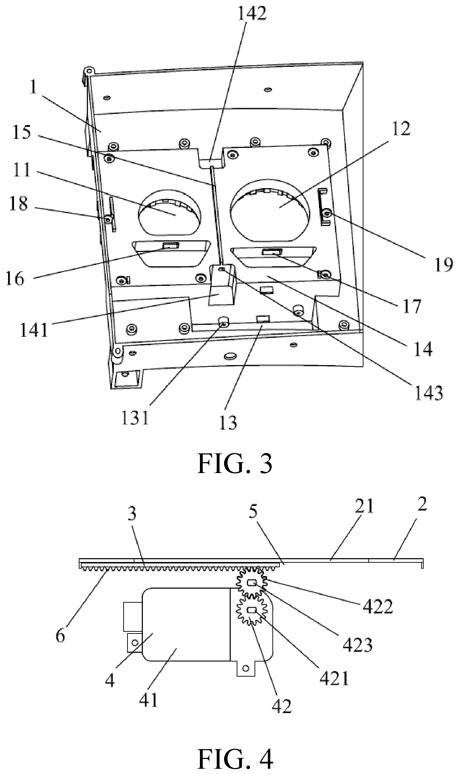

In an embodiment, referring to FIG. 3 and FIG. 4, the driving device 4 includes an actuator 41 and a transmission structure. An actuator mounting cavity 13 is provided on the charging inlet base 1. The actuator 41 is mounted to the actuator mounting cavity 13. The transmission structure is connected between the actuator 41 and the second plate 3. The actuator 41 drives the second plate 3 to move through the transmission structure. The actuator 41 includes a motor and a speed reducer. An output shaft of the motor is connected with an input end of the speed reducer. An output end of the speed reducer is connected with the transmission structure. The motor drives the second plate 3 to move, so that electric opening and closing of the first charging interface 11 and the second charging interface 12 are achieved, which can achieve electric opening and closing of an internal charging inlet cover (the second plate 3). In this way, intelligentization is high, an actual usage demand of a user is satisfied, and user experience is good. In addition, in combination with electric opening and closing of an external charging inlet cover, intelligentization and automation of the charging can be achieved, which helps dock with a charging robot. An instruction of driving the second plate 3 to move may be from a signal outputted by a vehicle detector, or may be from a signal outputted through interaction of a charging device with the vehicle.

In an embodiment, referring to FIG. 3, multiple screw mounting posts 131 are arranged in the actuator mounting cavity 13. In this way, the actuator 41 may be mounted to the actuator mounting cavity 13 through screws.

In an embodiment, the speed reducer is a non-self-locking worm gear reducer. In this way, when the motor does not operate, the second plate 3 may be manually pushed to back-drive the motor (which needs a force exceeding a preset magnitude) to achieve manual opening and closing of the internal charging inlet cover. Therefore, the manual opening and closing and the electric opening and closing of the internal charging inlet cover can be ensured, to ensure that a backup manual opening solution exists when the motor fails.

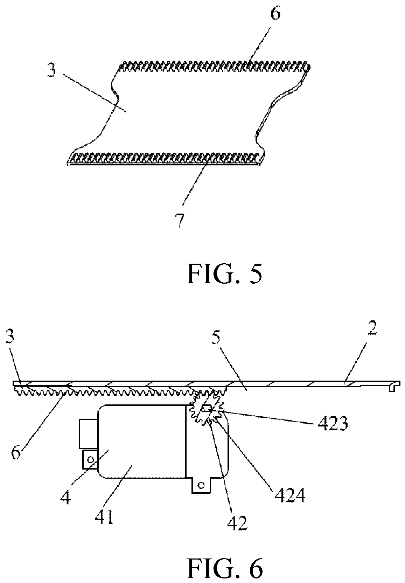

In an embodiment, referring to FIG. 4 and FIG. 5, a first rack 6 extending in the first direction is arranged on an inner side surface of the second plate 3. The transmission structure includes a gear transmission member 42. The gear transmission member 42 is drive-connected with the first rack 6. The gear transmission member 42 includes a first gear 421 and a second gear 422 meshed with each other. The first gear 421 is connected with the actuator 41. The second gear 422 is engaging with the first rack 6.

The first rack 6 and the second plate 3 may be separately arranged, and are fixedly connected by an adhesive or the like. Certainly, the first rack 6 and the second plate 3 may be integrally formed, to simplify a fitting process.

In an embodiment, referring to FIG. 4 and FIG. 5, the gear transmission member further includes a transmission shaft 423 and a third gear. The second gear 422 and the third gear are coaxially connected with two ends of the transmission shaft 423. A diameter of the second gear 423 is equal to that of the third gear. The first rack 6 is arranged on a side of the inner side surface of the second plate 3 close to the actuator 41. A second rack 7 parallel to the first rack 6 is arranged on a side of the inner side surface of the second plate 3 away from the actuator 41. The third gear is meshed with the second rack 7. In this way, the two sides of the second plate 3 are both supported by gears, and teeth, so that movement is more stable, and does not roll over.

However, in some other embodiments, the second rack 7 may be canceled. For example, the second rack 7, the third gear, and the transmission shaft 423 may be replaced with sliding assemblies (for example, sliding rails). In other words, sliding on the side of the second plate 3 away from the actuator 41 is supported by the sliding assembly.

Furthermore, in some other embodiments, the second plate 3 may be directly arranged in the movement space 5 in a sliding manner. The actuator 41 directly drives the second plate 3 to slide. In this case, the gear transmission member 42, the first rack, and the second rack 7 may be canceled.

In an embodiment, referring to FIG. 3, a boss 14 protruding outward is arranged on a bottom wall of the charging inlet base 1. A partition plate 15 is arranged at a middle position of the boss 14. The first charging inlet 11 and the second charging inlet 12 are on two sides of the partition plate 15 in the first direction. When the first charging interface 11 is used, the partition plate 15 can prevent rainwater, dust, and the like from entering the second charging inlet 12. Similarly, when the second charging interface 12 is used, the partition plate 15 can prevent the rainwater, the dust, and the like from entering the first charging inlet 11.

In an embodiment, referring to FIG. 3, a first locking hole 16 is provided below the first charging inlet 11 on the bottom wall of the charging inlet base 1. The first locking hole 16 is used for locking a charging gun inserted into the first charging inlet 11. A second locking hole 17 is provided below the second charging inlet 12 on the bottom wall of the charging inlet base 1. The second locking hole 17 is used for locking a charging gun inserted into the second charging inlet 12.

In an embodiment, referring to FIG. 3, a first accommodation cavity 141 is provided on a side of the boss 14 close to the actuator 41. A second accommodation cavity 142 is provided on a side of the boss 14 away from the actuator 41. The first gear 421 and the second gear 422 are accommodated in the first accommodation cavity 141. The third gear is accommodated in the second accommodation cavity 142. A first through hole 143 for the transmission shaft 423 to pass through is provided on the first accommodation cavity 141. A second through hole for the transmission shaft 423 to pass through is provided on the second accommodation cavity 142. The first through hole 141 is coaxial with the second through hole. In this way, the transmission shaft 423 is rotatably mounted to the charging inlet base 1.

However, it may also be figured out that a mounting base is arranged on the inner side surface of the second plate 3, and the transmission shaft 423 is rotatably mounted to the mounting base of the second plate 3.

In an embodiment, referring to FIG. 3, a first limiting member 18 is arranged on a side wall of the charging inlet base 1 away from the second charging inlet 12. A second limiting member 19 is arranged on a side of the bottom wall of the charging inlet base 1 away from the first charging inlet 11. The first limiting member 18 is configured to abut against and limit the second plate 3 when the second plate arrives at the first position. The second limiting member 19 is configured to abut against and limit the second plate 3 when the second plate arrives at the second position.

However, it may also be figured out that the first limiting member 18 and the second limiting member 19 are arranged on the second plate 3.

In the charging inlet assembly in this embodiment of the present disclosure, the driving device 4 can drive the second plate 3 to move between the first position and the second position. At the first position, the second plate 3 covers the first charging inlet 11, and exposes the second charging inlet 12. At the second position, the second plate 3 covers the second charging inlet 12, and exposes the first charging inlet 11. In other words, when the first charging inlet 11 is used, the second charging inlet 12 is covered by the second plate 3, and when the second charging inlet 12 is used, the first charging inlet 11 is covered by the second plate 3. The first charging inlet 11 and the second charging inlet 12 are opened or closed in a sliding manner, which does not occupy a space outside the first plate and helps plug and unplug the charging gun compared with an existing manually flipped internal charging inlet cover. In addition, only the second plate 3 is adopted to replace a fast charging inlet cover and a slow charging inlet cover in the related art, which simplifies a charging operating process, reduces components, and causes a simpler structure.

In addition, in another embodiment, referring to FIG. 6, the gear transmission member 42 includes a first output gear 424. The first output gear 424 is connected with the actuator 41. The first output gear 424 is meshed with the first rack 6.

In an embodiment, the gear transmission member 42 further includes the transmission shaft 423 and a second output gear. The first output gear 424 and the second output gear are coaxially connected with the two ends of the transmission shaft 423. A diameter of the first output gear 424 is equal to that of the second output gear. The first rack 6 is arranged on the side of the inner side surface of the second plate 3 close to the actuator 41. The second rack parallel to the first rack (not shown in FIG. 6) is arranged on the side of the inner side surface of the second plate 3 away from the actuator 41. The second output gear is meshed with the second rack.

The first output gear 424 is adopted to replace the first gear and the second gear shown in FIG. 4. The first output gear 424 is directly connected between the actuator 41 and the first rack 6, so that the transmission structure is simpler.

However, in some other embodiments, the second rack may be canceled. For example, the second rack and the second output gear may be replaced with sliding components (for example, sliding rails). In other words, sliding on the side of the second plate 3 away from the actuator 41 is supported by the sliding assembly.

Furthermore, in some other embodiments, the second plate 3 may be directly arranged in the movement space 5 in a sliding manner. The actuator 41 directly drives the second plate 3 to slide. In this case, the gear transmission member 42, the first rack 6, and the second rack may be canceled.

In addition, in some embodiments, the driving device 4 may be canceled. The second plate 3 can move between the first position and the second position through manual pushing. In this way, the structure is simpler, and costs are lower.

In addition, an embodiment of the present disclosure further provides a vehicle. The vehicle includes the above charging inlet assembly.

The vehicle further includes an external charging inlet cover. The external charging inlet cover is arranged outside of the first plate in a sliding or flipping manner.

In the descriptions of the present disclosure, it should be understood that orientation or position relationships indicated by the terms such as "center", "longitudinal", "transverse", "length", "width", "thickness", "up", "down", "front", "rear", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are merely used for ease and brevity of illustration and description of the present disclosure, rather than indicating or implying that the mentioned device or component needs to have a particular orientation or be constructed and operated in a particular orientation. Therefore, such terms cannot be construed as a limitation on the present disclosure.

In addition, the terms "first" and "second" are merely used for the purpose of description, and cannot be understood as indicating or implying relative importance or implicitly indicating a quantity of the indicated technical features. Therefore, features limited by "first" and "second" may explicitly or implicitly include one or more of the features. In the description of the present disclosure, "multiple" means more than two, unless otherwise explicitly and specifically defined.

In the present disclosure, unless otherwise explicitly specified or defined, the terms such as "mount", "connect", "connection", and "fix" should be understood in a broad sense. For example, the connection may be a fixed connection, a detachable connection, or an integral connection, or may be a mechanical connection or an electrical connection, or may be a direct connection, an indirect connection through an intermediate medium, internal communication between two elements, or an interaction relationship between two elements. A person of ordinary skill in the art may understand specific meanings of the above terms in the present disclosure based on a specific case.

In the present disclosure, unless otherwise explicitly specified or defined, a first feature being "on" or "under" a second feature may mean that the first feature is in a direct contact with the second feature, or the first feature is in an indirect contact with the second feature through an intermediate medium. In addition, the first feature being "over", "above", and "on" the second feature may mean that the first feature is directly or obliquely above the second feature, or may merely indicate that the first feature is at a higher horizontal position than the second feature. The first feature being "below", "under", and "beneath" the second feature may mean that the first feature is directly or obliquely below the second feature, or merely indicate that the first feature is at a lower horizontal position than the second feature.

In the descriptions of the specification, a description with reference to a term such as "an embodiment", "some embodiments", "an example", "a specific example", or "some examples" means that specific features, structures, materials, or characteristics described with reference to the embodiment or the example is included in at least one embodiment or example of the present disclosure. In the specification, exemplary descriptions of the above terms are not necessarily directed at the same embodiment or example. Moreover, the specific features, structures, materials, or characteristics described may be combined in a proper manner in any one or more embodiments or examples. In addition, a person skilled in the art may integrate or combine different embodiments or examples described in the specification and features of the different embodiments or examples as long as they are not contradictory to each other.

Although the embodiments of the present disclosure have been shown and described above, it may be understood that the above embodiments are exemplary and cannot be construed as a limitation on the present disclosure. A person of ordinary skill in the art may make changes, modifications, replacements, or variations to the above embodiments within the scope of the present disclosure.

## Claims

1. A charging inlet assembly, comprising a charging inlet base and an internal charging inlet sliding cover assembly, the internal charging inlet sliding cover assembly comprising a first plate and a second plate, the first plate being arranged on the charging inlet base, a movement space for the second plate to move being formed between the first plate and the charging inlet base, a through hole being provided on the first plate; and a first charging inlet and a second charging inlet being provided on an inner side of the through hole;
the second plate being movable between a first position and a second position, at the first position, the second plate covering the first charging inlet, and exposing the second charging inlet, and at the second position, the second plate covering the second charging inlet, and exposing the first charging inlet.

2. The charging inlet assembly according to claim 1, further comprising a driving device, the driving device being configured to drive the second plate to move between the first position and the second position.

3. The charging inlet assembly according to claim 2, wherein the driving device comprises an actuator and a transmission structure; an actuator mounting cavity is arranged on the charging inlet base; the actuator is mounted to the actuator mounting cavity; the transmission structure is connected between the actuator and the second plate; and
the actuator drives the second plate to move through the transmission structure.

4. The charging inlet assembly according to claim 3, wherein the actuator comprises a motor and a speed reducer; an output shaft of the motor is connected with an input end of the speed reducer; and an output end of the speed reducer is connected with the transmission structure.

5. The charging inlet assembly according to claim 4, wherein the speed reducer is a non-self-locking worm gear reducer.

6. The charging inlet assembly according to any of claims 3 to 5, wherein a first rack extending in a first direction is arranged on an inner side surface of the second plate; the transmission structure comprises a gear transmission member; and the gear transmission member is drive-connected with the first rack.

7. The charging inlet assembly according to claim 6, wherein the gear transmission member comprises a first gear and a second gear meshed with each other; the first gear is connected with the actuator; and the second gear is meshed with the first rack.

8. The charging inlet assembly according to claim 7, wherein the gear transmission member further comprises a transmission shaft and a third gear; the second gear and the third gear are coaxially connected with two ends of the transmission shaft; a diameter of the second gear is equal to that of the third gear; the first rack is arranged on a side of the inner side surface of the second plate close to the actuator; a second rack parallel to the first rack is arranged on a side of the inner side surface of the second plate away from the actuator; and the third gear is meshed with the second rack.

9. The charging inlet assembly according to any of claims 6 to 8, wherein the gear transmission member comprises a first output gear; the first output gear is connected with the actuator; and the first output gear is meshed with the first rack.

10. The charging inlet assembly according to claim 9, wherein the gear transmission member further comprises the transmission shaft and a second output gear; the first output gear and the second output gear are coaxially connected with the two ends of the transmission shaft; a diameter of the first output gear is equal to that of the second output gear; the first rack is arranged on the side of the inner side surface of the second plate close to the actuator; the second rack parallel to the first rack is arranged on the side of the inner side surface of the second plate away from the actuator; and the second output gear is meshed with the second rack.

11. The charging inlet assembly according to any of claims 1 to 10, wherein a boss protruding outward is arranged on a bottom wall of the charging inlet base; a partition plate is arranged at a middle position of the boss; and the first charging inlet and the second charging inlet are located at two sides of the partition plate in the first direction.

12. The charging inlet assembly according to any of claims 1 to 11, wherein a first locking hole is provided below the first charging inlet on the bottom wall of the charging inlet base; the first locking hole is used for locking a charging gun inserted into the first charging inlet;
a second locking hole is provided below the second charging inlet on the bottom wall of the charging inlet base; and the second locking hole is used for locking a charging gun inserted into the second charging inlet.

13. The charging inlet assembly according to any of claims 1 to 12, wherein a first limiting member is arranged on a side wall of the charging inlet base away from the second charging inlet; and a second limiting member is arranged on a side of the bottom wall of the charging inlet base away from the first charging inlet;
the first limiting member is configured to abut against and limit the second plate when the second plate arrives at the first position; and the second limiting member is configured to abut against and limit the second plate when the second plate arrives at the second position.

14. The charging inlet assembly according to any of claims 1 to 13, wherein one of the first charging inlet and the second charging inlet is a fast charging interface; and the other is a slow charging interface.

15. A vehicle, comprising the charging inlet assembly according to any of claims 1 to 14.
